# EUROPEAN PATENT APPLICATION

(11) **EP 2 737 931 A2**
(43) Date of publication of application: **04.06.2014**
(21) Application number: 12826362.1
(22) Date of filing: 21.08.2012
(51) Int. Cl.: A63F 5/04, A63F 13/00, G02F 1/1333, G02F 1/13357

(54) **BACKLIGHT UNIT AND LIQUID CRYSTAL DISPLAY DEVICE AND GAMING MACHINE INCLUDING SAME**

(30) Priority: 22.08.2011 KR 20110083225
(71) Applicant: Tovis Co., Ltd., Yeonsu-gu, Incheon 406-840 (KR)
(72) Inventor: KIM, Yong-Beom, Incheon 406-840 (KR)
(74) Representative: Manitz, Finsterwald & Partner GbR
(86) International application number: PCT/KR2012/006619
(87) International publication number: WO 2013/027992

(57) **Abstract**

A gaming machine includes: a liquid crystal panel; a backlight unit which is disposed behind the liquid crystal panel; and one or more reels which are disposed behind the backlight unit and on which a plurality of symbols are displayed. The backlight unit includes: a light switch plate which is formed such that a predetermined area corresponding to a symbol selection area where selected symbols among the plurality of symbols displayed on the reel can be selectively turned to be transparent or nontransparent using a polymer dispersed liquid crystal; a half mirror which is disposed behind the light switch plate; a first light source which is disposed in front of the half mirror and emits light passing through the light switch plate and progressing forward; and a second light source which is disposed behind the half mirror and emits lights.

## Description

### [Field of the Invention]

The present invention relates to a backlight unit and a liquid crystal display device and a gaming machine including the same. More particularly, the present invention relates to a backlight unit which can make a predetermined area transparent and a liquid crystal display device and a gaming machine including the same.

### [Background Art]

With increase of needs for various games, various gaming machines have been developed, and as an example, a slot machine which is used for casino game is one of gaming machines.

A gaming machine such a slot machine is provided with a plurality of reels on which symbols such as pictures or numbers are displayed, and takes a game rule that a game result is determined by combination of symbols displayed on the reels.

Recently, a liquid crystal display panel is used in a gaming machine having such a reel, and information for proceeding game or advertisement is displayed on the liquid crystal display panel.

A liquid crystal display panel is disposed in front of the reel, and in this case, symbols displayed on the reel which is disposed behind the liquid crystal display panel can be seen from the front of the liquid crystal display panel. For this function, several methods have been suggested. For example, in Korea Patent Publication No. 10-2007-0055766 (title: gaming machine having display screen), a light guide plate of a backlight unit of a liquid crystal display is made of transparent or translucent material and scratch or dot pattern is not formed on area of the light guide plate corresponding to symbol display area of the reel so that symbols of the reel can be seen from the front of the liquid crystal display through the area where the pattern is not formed, and in Korea Patent Publication No. 10-2006-0049328 (title: gaming machine), area of a diffuse sheet, a light guide plate, and a reflector of a backlight unit corresponding to symbol display area of the reel is removed and thus symbols of the reel can be seen from the front of the liquid crystal display.

However, a method suggested in Korea Patent Publication No. 10-2007-0055766 has a problem in that the area of the light guide plate on which scratch or dot pattern is not formed may deteriorate the function of uniform light penetration of the light guide plate so as to deteriorate light efficiency of the backlight unit. And, a method suggested in Korea Patent Publication No. 10-2006-0049328 has a problem in that images cannot be displayed on openings existed in the diffuse sheet, a light guide plate and a reflector and images cannot be displayed on the openings when game using the reel is not performed.

### [Detailed Description of the Invention]

### [Technical Problem]

The present invention has been made in an effort to solve the above-mentioned problem and to provide a backlight unit for a liquid crystal display device in which a predetermined area can be converted to a transparent state and a liquid crystal display device and a gaming machine including the same.

### [Technical Solution]

A backlight unit for a liquid crystal display according to an exemplary embodiment of the present invention includes: a light switch plate which is formed such that a predetermined area thereof can be selectively turned to be transparent or nontransparent; a half mirror which is disposed behind the light switch plate; a first light source which is disposed in front of the half mirror and emits light passing through the light switch plate and progressing forward; and a second light source which is disposed behind the half mirror and emits lights.

The light switch plate may include: a pair of transparent plates which are disposed to face each other, transparent electrodes being respectively formed at corresponding predetermined areas of facing surfaces of the transparent plates; and a polymer dispersed liquid crystal layer which is formed in a space between the pair of the transparent plates and is made of a polymer dispersed liquid crystal.

A liquid crystal display device according to an embodiment of the present invention includes the above-mentioned backlight unit and a liquid crystal panel which is disposed in front of the light switch plate.

A gaming machine according to an exemplary embodiment of the present invention includes: a liquid crystal panel; a backlight unit which is disposed behind the liquid crystal panel; and one or more reels which are disposed behind the backlight unit and on which a plurality of symbols are displayed. The backlight unit includes: a light switch plate which is formed such that a predetermined area corresponding to a symbol selection area where selected symbols among the plurality of symbols displayed on the reel can be selectively turned to be transparent or nontransparent using a polymer dispersed liquid crystal; a half mirror which is disposed behind the light switch plate; a first light source which is disposed in front of the half mirror and emits light passing through the light switch plate and progressing forward; and a second light source which is disposed behind the half mirror and emits lights.

In case that a game using the reel is not performed and the liquid crystal panel is operated, the predetermined area of the light switch plate may be controlled to be nontransparent, the second light source may be controlled to be turned off, and the first light source may be controlled to be turned on.

In case that a game using the reel is performed, the predetermined area of the light switch plate may be controlled to be transparent and the second light source may be controlled to be turned on.

The light switch plate may include: a pair of transparent plates which are disposed to face each other, transparent electrodes being respectively formed at corresponding predetermined areas of facing surfaces of the transparent plates; and a polymer dispersed liquid crystal layer which is formed in a space between the pair of the transparent plates and is made of a polymer dispersed liquid crystal.

### [Advantages Effects]

According to the present invention, symbols of a reel which is disposed behind a liquid crystal panel can be selectively seen by a light switch plate, and in case that symbols of a reel can be seen, amount of light which is reflected by a reel to progress forward can be reduced, so spots in images or distortion of images which may be produced by the reflected light can be substantially reduced.

### [Brief Descriptions of Drawings]

FIG. 1 is a perspective view of a gaming machine according to an exemplary embodiment of the present invention.
FIG. 2 is an exploded perspective view of a liquid crystal display device and a reel of a gaming machine according to an exemplary embodiment of the present invention.
FIG. 3 is a sectional view taken along a line III-III in FIG. 2.
FIG. 4 is a drawing for explaining position relation of a pair of light guide plates and a light switch plate of a backlight unit of a liquid crystal display device and a symbol selection area of a reel of a gaming machine according to an exemplary embodiment of the present invention.
FIG. 5 and FIG. 6 are drawings for explaining operations of a gaming machine according to an embodiment of the present invention.

### [Detailed Description of the Embodiments]

Embodiments of the present invention will now be described hereinafter with reference to the accompanying drawings.

In the drawings, the thickness of layers, films, panels, regions, etc. are exaggerated for clarity. Like reference numerals designate like elements throughout the specification. It will be understood that when an element such as a layer, film, region or substrate is referred to as being "on" another element, it can be directly on the other element or intervening elements may also be present. In contrast, when an element is referred to as being "directly on" another element, there are no intervening elements present.

Since a backlight unit according to an embodiment of the present invention and a liquid crystal display device including a backlight unit according to an embodiment of the present invention are included in a gaming machine according to an embodiment of the present invention, separate descriptions for a backlight unit according to an embodiment of the present invention and a liquid crystal display device including a backlight unit according to an embodiment of the present invention are omitted.

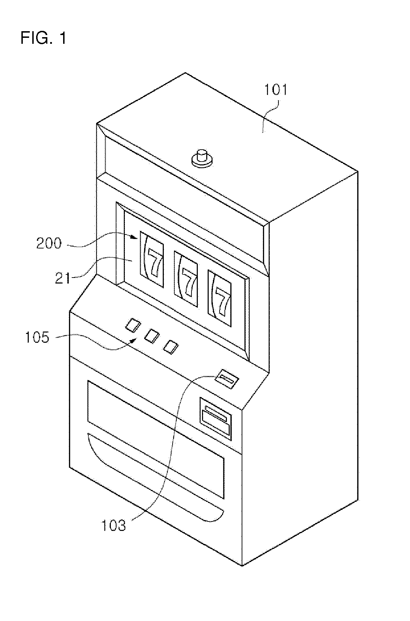

Referring to FIG. 1, a gaming machine according to an embodiment of the present invention is provided with a body 101 of a cabinet shape, and various parts and controllers for game is housed in body 101.

Various parts which are necessary for performing game, e.g., an insert hole 103 for insertion of coin, various input buttons 105 or the like, may be provided or formed to body 101.

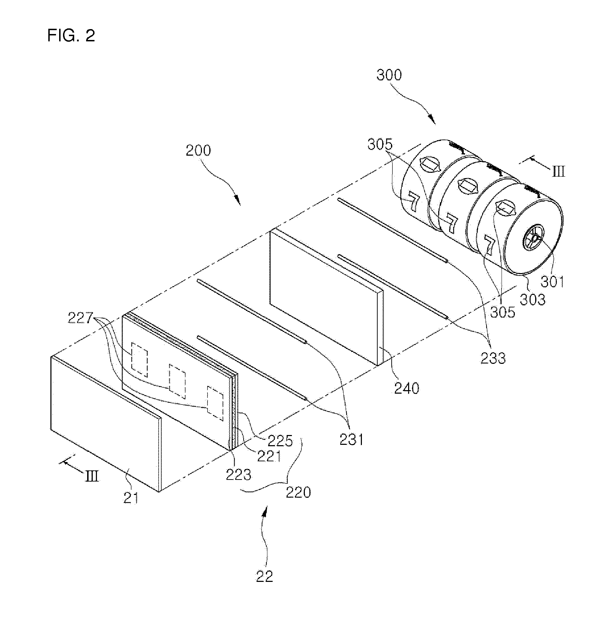

As shown in FIG. 2 to FIG. 4, a gaming machine includes a liquid crystal display device 200 which is a display device for displaying images, and a reel 300 which is disposed behind liquid crystal display device 200.

Liquid crystal display device 200 includes a liquid crystal panel 21 and a backlight unit 22.

Liquid crystal display device 200, as shown in FIG. 1, is installed to body 101 of a gaming machine such that a front surface of liquid crystal panel 21 is exposed to outside. Accordingly, liquid crystal display device 200 may role as an image display of a gaming machine and can display various images such as information or images for performing game and advertisements.

Liquid crystal display device 200 according to an embodiment of the present invention operates to display desired images on the whole image display area of liquid crystal panel 21 or to convert a predetermined area among the whole image display area to be transparent or translucent. At this time, "transparent" or "translucent" means that an object or image behind the same can be seen in front, and "transparent or translucent" is simply written as "transparent".

The predetermined area is an area corresponding to a symbol selection area where the selected symbol of reel 300 disposed behind liquid crystal display device 200 is disposed, and in case that the predetermined area is turned to be transparent, a symbol (e.g., a figure, a number, a picture or the like) displayed in the symbol selection area of reel 300 disposed behind liquid crystal display device 200 can be seen from the front of liquid crystal display device 200.

In case that liquid crystal display device 200 operates such the predetermined area becomes transparent, a symbol displayed on reel 300 can be seen from the front of a gaming machine through the predetermined area, so a game using the symbol displayed on reel 300 can be performed. At this time, liquid crystal display device 200 operates such that a symbol of reel 300 can be seen through the predetermined area, and at the same time, may display other information or images necessary for a game or other information or images on an image display area other than the predetermined area.

On the other hand, in case that liquid crystal display device 200 operates such that the predetermined area is not transparent (for example, displaying an image on the whole image display area), liquid crystal display device 200 may operate as a normal display device, i.e., operate to display an image on the whole image display area while preventing a symbol of the reel from being seen from the front.

A backlight unit, and a liquid crystal display for realizing this function according to an embodiment of the present invention and a gaming machine including the same will be described in detail hereinafter.

Referring to FIG. 2 to FIG. 4, liquid crystal display device 200 includes liquid crystal panel 21 and backlight unit 22 which are disposed back and forth in a line.

Liquid crystal panel 21 may be a conventional transparent liquid crystal panel, and for example, may be formed by sealing liquid crystal in a space formed between two facing transparent panels such as a glass panel on which thin film transistors are formed. At this time, a default display mode of liquid crystal panel 21 may be set as a normally white. "Normally white" means that a white display state (light can penetrate toward a display surface, i.e., light penetrating through a display surface can be from the outside) is realized while a liquid crystal panel is not operated.

Backlight unit 20 acts as a light source of liquid crystal display device 200 and is disposed behind liquid crystal panel 21.

Meanwhile, not shown in the drawing, liquid crystal display device 200 may further include a chassis including various frames and holders for assembling liquid crystal panel 21 and backlight unit 22. In addition, liquid crystal display device 200 may further include well known various parts such as a driving circuit for driving liquid crystal panel 21, etc. Gap between liquid crystal panel 21 and backlight unit 22 is enlarged for ease of description, but both may contact each other and may be disposed with a small gap.

Backlight unit 22 includes a light switch plate 220 which is formed such that a predetermined area (an area corresponding to the symbol selection area where a selected symbol locates) thereof can be selectively transparent or nontransparent.

For example, light switch plate 220 may be formed such that the predetermined area thereof can selectively become transparent or nontransparent using a polymer dispersed liquid crystal (PDLC).

PDLC is one of liquid crystal cells which can be used in a liquid crystal display (LCD) and regulates penetration of light depending on light scattering intensity. There are some types of PDLC, for example, it may be formed by scattering liquid crystal particles of several µm into polymer, or by containing liquid crystal into net type polymer. Alignment of liquid crystal of PDLC becomes irregular when voltage is not applied thereto and light scattering occurs on a surface having different refractive index from medium, and on the other hand, if voltage is applied to PDLC, directions of liquid crystal molecules becomes uniform so that light can penetrate therethrough.

Referring to FIG. 2, a PDLC layer 221 may be formed in a space between a pair of transparent plates 223 and 225 facing each other. That is, as shown in the drawing, a pair of transparent plates 223 and 225 are arranged to contact both sides of PDLC layer 221 respectively.

For example, by arranging a pair of transparent plates 223 and 225 to face each other and sealing PDLC in a space therebetween, a pair of transparent plates 223 and 225 and PDLC layer 221 disposed therebetween may be formed. Although structure for sealing PDLC layer 221 is not shown in the drawing, such a structure is obvious to a person in the art, so detailed description for the same will be omitted.

Transparent plates 223 and 225 may be made of transparent material through which light can penetrate, e.g., may be made of transparent glass.

Meanwhile, transparent electrodes 227 and 229 are formed respectively on facing surfaces of a pair of transparent plates 223 and 225. That is, transparent electrodes 227 and 229 are formed respectively on surfaces of a pair of transparent plates 223 and 225 contacting PDLC layer 221.

Transparent electrodes 227 and 229 may be made of material which is transparent and has electrical conductivity, and for example, may be made of ITO (Indium Tin Oxide) which is generally used as a transparent electrode of a liquid crystal panel.

At this time, transparent electrodes 227 and 229 are formed on predetermined areas of surfaces of transparent plates 223 and 225 contacting PDLC layer 221. At this time, the predetermined areas are areas corresponding to a symbol selection area where selected area of reel 300 disposed behind liquid crystal display device 200 is disposed. That is, a plurality of symbols are displayed on an outer surface of reel 300 and when rotating reel 300 stops, a symbol which is disposed at the front side of reel 300 is the selected symbol, and transparent electrodes 227 and 229 are formed on areas corresponding to an area where the selected symbol of reel 300 is disposed, i.e., corresponding to a symbol selection area. At this time, transparent electrodes 227 and 229 may be formed with size and shape substantially identical with the symbol selection area. Accordingly, when seeing from the front of liquid crystal display device 200, transparent electrodes 227 and 229 and an area where the selected symbol is displayed, i.e., the symbol selection area are overlapped in a back and forth direction.

Meanwhile, not shown in the drawing, transparent electrodes 227 and 229 are connected to the outside electrical power source so as to be applied by voltage, and liquid crystal display device 200 may include an electrical circuit for controlling to selectively apply voltage to transparent electrodes 227 and 229.

Meanwhile, backlight unit 22 may include a half mirror 240 which is disposed behind light switch plate.

Half mirror 240 reflects some portion of light arrived at the surface thereof and transmits the other portion of light to have predetermined light reflection ratio and light transmission ratio as known in the art. At this time, the light reflection ratio of half mirror 240 is not limited to 50%, and may be set as a suitable value. For example, a half mirror having 50% of light reflection ratio and 50% of light transmission ratio reflects 50% of light arrived at the surface thereof and allows the remained 50% of light to transmit therethrough, and a half mirror having 60% of light reflection ratio and 40% of light transmission ratio reflects 60% of light arrived at the surface thereof and allows the remained 40% of light to transmit therethrough.

Further, backlight unit 22 may include a first light source 231 which is disposed in front of half mirror 240 and a second light source 233 which is disposed behind half mirror 240.

First light source 231 emits light which passes light switch plate 220 and progresses forward. At this time, first light source 231 may be disposed between light switch plate 220 and half mirror 240 as shown in the drawing, and may be disposed near the sides of light switch plate 220.

Meanwhile, not shown in the drawing, a frame for fixing first light source 231 and second light source 233 may be provided, and the number and the position of first light source 231 and second light source 233 may be varied. Further, first and second light sources 231 and 233 may be realized as an arbitrary device which can emit light such as a cathode ray lamp or an LED lamp.

PDLC layer 221 which is disposed between the pair of transparent plates 223 and 225 plays a role of diffusing light emitted from first and second light sources 231 and 233 to make the light more uniform. The light is diffused by PDLC layer 221 and then progresses forward, so luminance is made more uniform and a viewing angle becomes greater.

Reel 300 is housed within body 101 of a gaming machine so as to be disposed behind liquid crystal display device 200. Reel 300 may be provided as a plural, respective reel 300 may be disposed adjacently in parallel. Respective reel 300 may be formed to rotate independently.

For example, reel 300 may include a reel drum 301 and a reel strip 303 which is attached to an outer surface of reel drum 301. And a motor (not shown) for rotating reel drum 301 may be provided.

For example, reel strip 303 may be made of translucent resin.

A plurality of symbols 305 may be displayed on an outer surface of reel strip 303, and respective symbol 307 may be equidistantly disposed with some interval therebetween. At this time, the symbol may be a number, a picture, a letter, etc. Hereinafter, an area of reel strip 303 where the symbol 307 is displayed is referred to as a symbol display area. That is, respective reel 300 has symbol display area of the same number with the number of symbols 307 displayed on an outer surface thereof.

Respective reel 300 may rotate and stop at a state that the symbol display area where the symbol 307 is displayed is positioned at a front center. Hereinafter, an imaginary area corresponding to a front center at which the symbol display area where the symbol 307 is displayed stops is referred to as the symbol selection area.

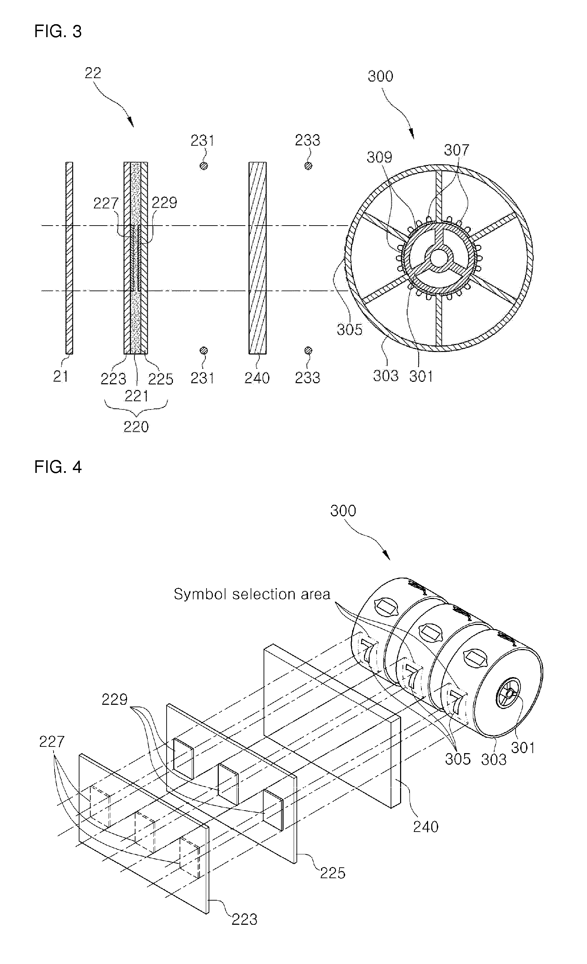

Meanwhile, an auxiliary light source 307 may be disposed behind the symbol display area where symbol 305 of reel 300 is displayed. For example, referring to FIG. 3, auxiliary light source 307 may be mounted on a mount 309 which is disposed behind the symbol display area where symbol 305 is displayed. Auxiliary light source 307 may be an arbitrary light source emitting light such as an LED lamp. By auxiliary light source 307 symbol displayed in the symbol display area can be further brightly seen.

As shown in FIG. 3 and FIG. 4, an area occupied by transparent electrodes 227 and 229 which are formed in transparent plates 223 and 225 corresponds to the symbol selection area of reel 300.

That is, a number, a position, a size and a shape of transparent electrodes 227 and 229 which are formed in transparent plates 223 and 225 corresponds to a number, a position, a size and a shape of the symbol selection area of reel 300 respectively. For example, as shown in the drawing, three reels 300 are arranged in a horizontal direction, transparent electrodes 227 and 229 are respectively provided with three, and have a position and a shape corresponding to a position and a shape of the symbol selection area.

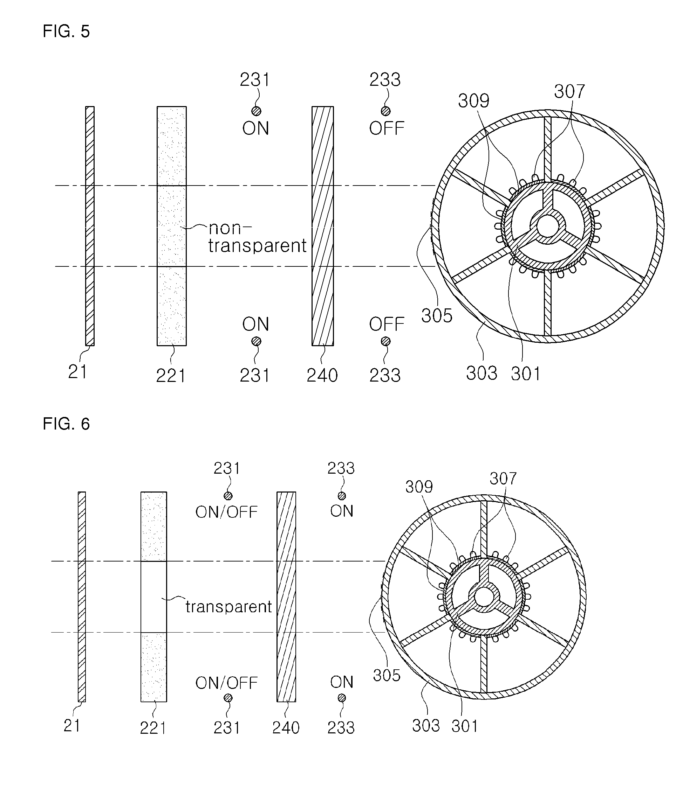

Operation of a gaming machine and a half mirror according to an embodiment of the present invention will be explained in more detail with reference to FIG. 5 and FIG. 6 hereinafter. FIG. 5 is a drawing for explaining the case that a game using reel 300 in a gaming machine according to an embodiment of the present invention is not performed and liquid crystal display 21 operates, and FIG. 6 is a drawing for explaining the case that a game using the reel in a gaming machine according to an embodiment of the present is performed.

First, referring to FIG. 5, in a case that a game using reel 300 is not performed and liquid crystal display 21 operates to display images, the predetermined area of light switch plate 220 is controlled to be nontransparent, second light source 233 is controlled to be turned off, and first light source 231 is controlled to be turned on. At this time, since transparent plates 223 and 225 and transparent electrodes 227 and 229 are transparent, they are omitted in FIG. 5.

That is, if electric power is not applied to transparent electrodes 227 and 229 of light switch plate 220, the whole area of PDLC layer 221 becomes nontransparent by the characteristics of a polymer dispersed liquid crystal. Accordingly, light emitted from first light source 231 passes through light switch plate 220 and liquid crystal display 21 to display images, the symbol of reel 300 cannot be seen from the front of the gaming machine due to light switch plate 220 of nontransparent state.

Meanwhile, at this state, half mirror 240 plays a role of preventing quality decrease and distortion of images by light reflected by reel 300. That is, in case that half mirror 240 is not provided, light which arrives at reel 300 among light emitted from first light source 231 is reflected by the surface of reel 300 and a portion of reflected light progresses forward to pass through liquid crystal display 21, and at this time light is irregularly reflected by various symbols on the surface of reel 300, and this may produce spots in images displayed by liquid crystal display 21 or may distort the images. However, in case that half mirror 240 is provided, a portion (light corresponding to the reflection ratio of half mirror) of light emitted form first light source 231 and progressing backward is reflected and the remained light passes through half mirror 240 to arrive at reel 300, and light reflected by reel 300 passes through half mirror 240 to progress forward, and during this process a portion of light is reflected and the remained light passes through half mirror 240 and progresses forward. For example, in case that the reflection ratio of half mirror 240 is 50%, 50% of light emitted from first light source 231 and arriving half mirror 240 passes through half mirror 240 and arrives reel 300, and 50% of light reflected from reel 300 and arriving half mirror passes through half mirror 240 and progresses forward. Accordingly, since half mirror 240 is provided, amount of light reflected by reel 300 and progressing forward can be substantially reduced while a game using reel 300 is not performed, and thereby a problem that spots are produced in images of liquid crystal display 21 by nonuniform light due to symbols displayed on reel 300 can be lessened.

Meanwhile, referring to FIG. 6, in case that a game using reel 300 is performed, electric power is applied to transparent electrodes 227 and 229 of light switch plate 220 so that the predetermined area of PDLC layer 221 becomes transparent and accordingly the predetermined area of light switch plate 220 is controlled to be transparent, and second light source 233 is turned on. Accordingly, symbols of reel 300 are illuminated by light of second light source 223 so that the symbols can be seen from the front of the gaming machine. At this time, first light source 231 may be controlled to be turned on or turned off.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a backlight unit, and a liquid crystal display and a gaming machine including the same, so has an industrial applicability.

## Claims

1. A backlight unit for a liquid crystal display comprising:
a light switch plate which is formed such that a predetermined area thereof can be selectively turned to be transparent or nontransparent;
a half mirror which is disposed behind the light switch plate;
a first light source which is disposed in front of the half mirror and emits light passing through the light switch plate and progressing forward; and
a second light source which is disposed behind the half mirror and emits lights.

2. The backlight unit of claim 1, wherein the light switch plate comprises:
a pair of transparent plates which are disposed to face each other, transparent electrodes being respectively formed at corresponding predetermined areas of facing surfaces of the transparent plates; and
a polymer dispersed liquid crystal layer which is formed in a space between the pair of the transparent plates and is made of a polymer dispersed liquid crystal.

3. A liquid crystal display device comprising a backlight unit of claim 1 or claim 2, and a liquid crystal panel which is disposed in front of the light switch plate.

4. A gaming machine comprising:
a liquid crystal panel;
a backlight unit which is disposed behind the liquid crystal panel; and
one or more reels which are disposed behind the backlight unit and on which a plurality of symbols are displayed,
wherein the backlight unit comprises:
a light switch plate which is formed such that a predetermined area corresponding to a symbol selection area where selected symbols among the plurality of symbols displayed on the reel can be selectively turned to be transparent or nontransparent using a polymer dispersed liquid crystal;
a half mirror which is disposed behind the light switch plate;
a first light source which is disposed in front of the half mirror and emits light passing through the light switch plate and progressing forward; and
a second light source which is disposed behind the half mirror and emits lights.

5. The gaming machine of claim 4, wherein in case that a game using the reel is not performed and the liquid crystal panel is operated, the predetermined area of the light switch plate is controlled to be nontransparent, the second light source is controlled to be turned off, and the first light source is controlled to be turned on.

6. The gaming machine of claim 4 or claim 5, wherein in case that a game using the reel is performed, the predetermined area of the light switch plate is controlled to be transparent and the second light source is controlled to be turned on.

7. The gaming machine of claim 4, wherein the light switch plate comprises:
a pair of transparent plates which are disposed to face each other, transparent electrodes being respectively formed at corresponding predetermined areas of facing surfaces of the transparent plates; and
a polymer dispersed liquid crystal layer which is formed in a space between the pair of the transparent plates and is made of a polymer dispersed liquid crystal.
